# EUROPEAN PATENT APPLICATION

(11) **EP 4 738 596 A1**
(43) Date of publication of application: **06.05.2026**
(21) Application number: 24882570.5
(22) Date of filing: 26.06.2024
(51) Int. Cl.: H01M 50/502, H01M 50/519, H01M 50/533, C09J 9/00, C09J 7/22

(54) **BATTERY CORE MODULE**

(30) Priority: 26.10.2023 KR 20230145119
(71) Applicant: LG Energy Solution, Ltd., Seoul 07335 (KR)
(72) Inventor: HUANG, Chien-Pin, Taipei City, 11494 (TW)
(74) Representative: Plasseraud IP
(86) International application number: PCT/KR2024/008919
(87) International publication number: WO 2025/089538

(57) **Abstract**

The present disclosure relates to a battery core module including a battery unit and an electrical connection assembly. The battery unit includes a battery body, a first electrode, and a second electrode, wherein the battery body has an end and wherein the first electrode and the second electrode are disposed at the end. The electrical connection assembly is disposed at the end and includes a first conductive component, a second conductive component, a third conductive component, a thermal cut-off element, and an insulating adhesive. The insulating adhesive wraps a portion of the first conductive component, a portion of the second conductive component, and a portion of the third conductive component, and the thermal cut-off element is connected between the second conductive component and the third conductive component. The first conductive component is connected to the first electrode, and the second conductive component is connected to the second electrode.

## Description

### TECHNICAL FIELD

The present disclosure relates to a battery core module and, more particularly, to a battery core module including a thermal cut-off element.

The present application claims priority to Korean Patent Application No. 10-2023-0145119 filed on October 26, 2023 in the Republic of Korea, the disclosures of which are incorporated herein by reference.

### BACKGROUND ART

A battery assembly of electronic products (e.g., laptops, tablets, or the like) usually includes a battery core module therein. In order to pass the shock/drop test of electronic products, buffering and protection measures are required for a positive electrode, a negative electrode, and a thermal cut-off element on the end of the battery core module. In conventional electronic products, insulating paper is used to wrap the positive electrode and negative electrode, and foam is used to protect the thermal cut-off element and the positive electrode adjacent to the thermal cut-off element. However, this method has the problems of making it difficult to protect the negative electrode using foam, and making assembly complicated and inconvenient.

### DISCLOSURE

### Technical Problem

The present disclosure has been designed to solve the problems of the related art, and therefore the present disclosure is directed to providing a battery core module capable of effectively protecting the electrode structure with a simple structure.

### Technical Solution

According to the present disclosure, a battery core module includes a battery unit and an electrical connection assembly. The battery unit includes a battery body, a first electrode, and a second electrode, wherein the battery body has an end and wherein the first electrode and the second electrode are disposed at the end. The electrical connection assembly is disposed at the end and includes a first conductive component, a second conductive component, a third conductive component, a thermal cut-off element, and an insulating adhesive. The insulating adhesive wraps a portion of the first conductive component, a portion of the second conductive component, and a portion of the third conductive component, and the thermal cut-off element is connected between the second conductive component and the third conductive component. The first conductive component is connected to the first electrode, and the second conductive component is connected to the second electrode.

In an embodiment of the present disclosure, the insulating adhesive is coupled to the first conductive component, the second conductive component, and the third conductive component through insert-injection molding.

In an embodiment of the present disclosure, the insulating adhesive has two openings, and a local portion of the first conductive component and a local portion of the second conductive component are respectively exposed through the two openings so as to be connected to the first electrode and the second electrode, respectively.

In an embodiment of the present disclosure, the insulating adhesive has two openings, and a local portion of the second conductive component and a local portion of the third conductive component are respectively exposed through the two openings so as to be connected to both ends of the thermal cut-off element, respectively.

In an embodiment of the present disclosure, a distal end of the first conductive component and a distal end of the third conductive component protrude and extend from the insulating adhesive.

In an embodiment of the present disclosure, the first electrode extends to be folded onto the electrical connection assembly and is connected to the first conductive component, and the second electrode extends to be folded onto the electrical connection assembly and is connected to the second conductive component.

In the present disclosure, the battery core module is installed inside an electronic product, wherein a distal end of the first conductive component and a distal end of the third conductive component are connected to a circuit board of the electronic product, wherein the first electrode is connected to the circuit board through the first conductive component, and wherein the second electrode is connected to the circuit board through the second conductive component, the thermal cut-off element, and the third conductive component.

In the present disclosure, the insulating adhesive is configured to wrap a portion of the first conductive component, a portion of the second conductive component, and a portion of the third element, and the thermal cut-off element may be connected between the second conductive component and the third conductive component.

In the present disclosure, the insulating adhesive may be coupled to the first conductive component, the second conductive component, and the third conductive component, and the thermal cut-off element may be connected to the second conductive component and the third conductive component through laser welding.

In the present disclosure, the first conductive component, the second conductive component, the third conductive component, the thermal cut-off element, and the insulating adhesive are preferentially formed into the electrical connection assembly, and then installed together at the end of the battery body.

### Advantageous Effects

According to the above, the battery core module according to the present disclosure is configured to wrap the first conductive component, the second conductive component, and the third conductive component using an insulating adhesive. As a result, the first conductive component, the second conductive component, and the third conductive component may be well protected, and since the first conductive component, the second conductive component, the third conductive component, the thermal cut-off element, and the insulating adhesive are preferentially formed into an electrical connection assembly and then installed all at the end of the battery body, the assembly thereof is very simple.

### DESCRIPTION OF DRAWINGS

FIG. 1 is a partially perspective view of a battery core module according to an embodiment of the present disclosure.
FIG. 2 is an exploded view of the battery core module in FIG. 1.
FIG. 3 is a plan view of the electrical connection assembly in FIG. 1.
FIG. 4 illustrates a state in which the first electrode and the second electrode in FIG. 1 are not folded.
FIG. 5 is a perspective view illustrating a partial structure of the electrical connection assembly in FIG. 2.
FIG. 6 is an exploded view of the electrical connection assembly in FIG. 5.

### BEST MODE

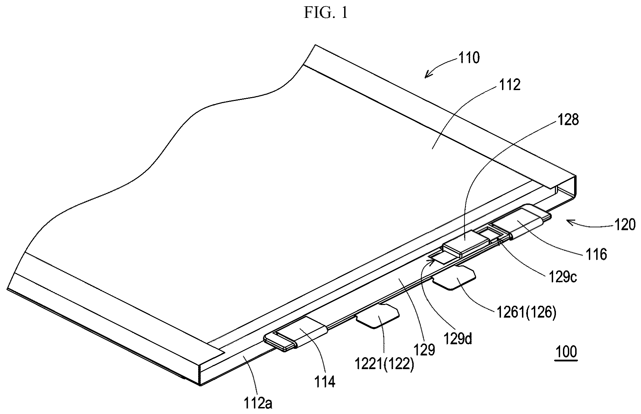

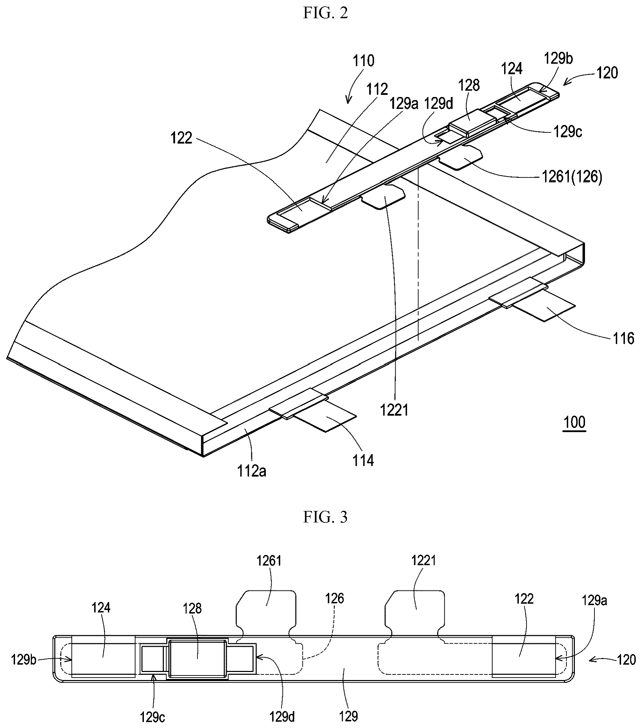

FIG. 1 is a partially perspective view of a battery core module according to an embodiment of the present disclosure. FIG. 2 is an exploded view of the battery core module in FIG. 1. FIG. 3 is a plan view of the electrical connection assembly in FIG. 1. Referring to FIGS. 1 to 3, a battery core module 100 according to the present embodiment includes a battery unit 110 and an electrical connection assembly 120. The battery unit 110 includes a battery body 112, a first electrode 114, and a second electrode 116. The battery body 112 has an end 112a, and the first electrode 114 and the second electrode 116 are disposed at the end 112a. The electrical connection assembly 120 is disposed at the end 112a of the battery body 112 to form an electrode structure in common with the first electrode 114 and the second electrode 116.

The electrical connection assembly 120 includes a first conductive component 122, a second conductive component 124, a third conductive component 126, a thermal cut-off element 128, and an insulating adhesive 129. The insulating adhesive 129 wraps a portion of the first conductive component 122, a portion of the second conductive component 124, and a portion of the third conductive component 126, and the thermal cut-off element 128 is connected between the second conductive component 124 and the third conductive component 126. The first conductive component 122 is connected to the first electrode 114, and the second conductive component 124 is connected to the second electrode 116.

As described above, the battery core module 100 according to the present embodiment is configured such that the first conductive component 122, the second conductive component 124, and the third conductive component 126 are wrapped by the insulating adhesive 129. Accordingly, the first conductive component 122, the second conductive component 124, and the third conductive component 126 may be well protected, and the first conductive component 122, the second conductive component 124, the third conductive component 126, the thermal cut-off element 128, and the insulating adhesive 129 are preferentially formed into the electrical connection assembly 120, and then disposed together at the end 112a of the battery body 112, so that the assembly is very simple. In addition, the insulating adhesive 129 wraps only the first conductive component 122, the second conductive component 124, and the third conductive component 126, and does not wrap the thermal cut-off element 128, so that the thermal cut-off element 128 may be easily disassembled and reprocessed.

In the present embodiment, the insulating adhesive 129 is coupled to the first conductive component 122, the second conductive component 124, and the third conductive component 126 through insert-injection molding, and the material of the insulating adhesive 129 is a plastic applicable to injection molding, but the present disclosure is not limited thereto. After the insulating adhesive 129 is coupled to the first conductive component 122, the second conductive component 124, and the third conductive component 126 through insert-injection molding or other methods, the thermal cut-off element 128 is coupled to the second conductive component 124 and the third conductive component 126.

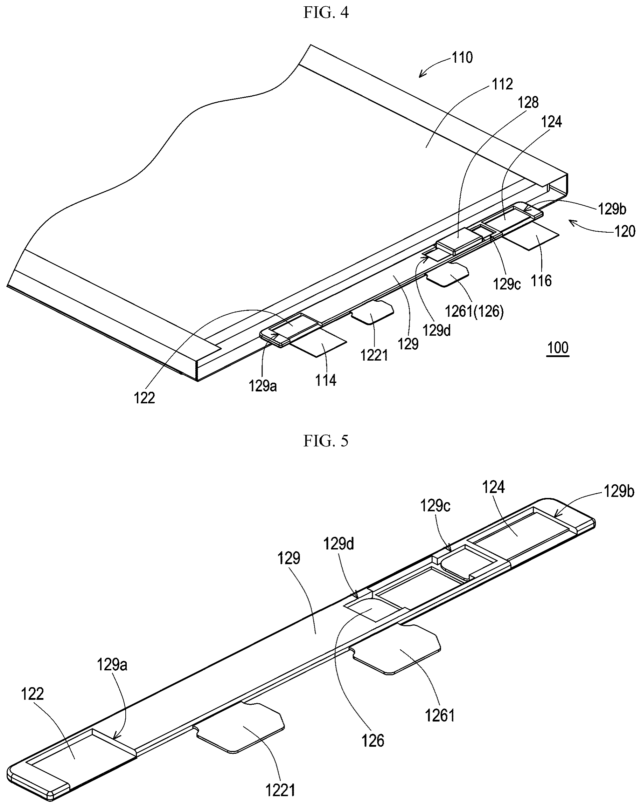

FIG. 4 illustrates a state in which the first electrode and the second electrode in FIG. 1 are not folded. After the electrical connection assembly 120 is disposed at the end 112a of the battery body 112, the first electrode 114 switches from the unfolded state in FIG. 4 to the folded state in FIG. 1 and extends onto the electrical connection assembly 120 to be connected to the first conductive component 122, and the second electrode 116 switches from the unfolded state in FIG. 4 to the folded state in FIG. 1 and extends onto the electrical connection assembly 120 to be connected to the second conductive component 124.

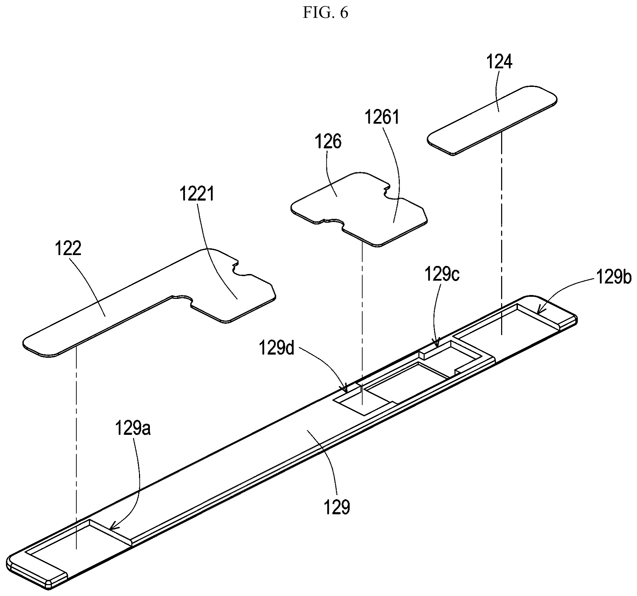

FIG. 5 is a perspective view illustrating a partial structure of the electrical connection assembly in FIG. 2. FIG. 6 is an exploded view of the electrical connection assembly in FIG. 5. Referring to FIGS. 5 and 6, specifically, the insulating adhesive 129 according to the present embodiment includes two openings 129a and 129b, and the local portion of the first conductive component 122 and the local portion of the second conductive component 124 are exposed through the openings 129a and 129b, respectively, so as to be connected to the first electrode 114 and the second electrode 116, respectively, illustrated in FIGS. 1 and 2.

In addition, the insulating adhesive 129 according to the present embodiment includes two openings 129c and 129d, and the local portion of the second conductive component 124 and the local portion of the third conductive component 126 are exposed through the openings 129c and 129d, respectively, so as to be connected to both ends of the thermal cut-off element 128, respectively. The thermal cut-off element 128 is connected to the second conductive component 124 and the third conductive component 126 by, for example, laser welding or other suitable methods, and the present disclosure is not limited thereto.

When the battery core module 100 is installed inside a relevant electronic product, the first electrode 114 is connected to a corresponding circuit board in the electronic product through the first conductive component 122, and the second electrode 116 is connected to a corresponding circuit board in the electronic product through the second conductive component 124, the thermal cut-off element 128, and the third conductive component 126. In the present embodiment, a distal end 1221 of the first conductive component 122 and a distal end 1261 of the third conductive component 126 protrude and extend from the insulating adhesive 129 so as to be suitable for connection with the circuit board.

As described above, the battery core module according to the present disclosure is configured to wrap the first conductive component, the second conductive component, and the third conductive component using the insulating adhesive. Therefore, the first conductive component, the second conductive component, and the third conductive component may be well protected, and the first conductive component, the second conductive component, the third conductive component, the thermal cut-off element, and the insulating adhesive may be formed into the electrical connection assembly and then disposed together at the end of the battery body, so that the assembly is very simple.

In addition, the insulating adhesive wraps only the first conductive component, the second conductive component, and the third conductive component, and does not wrap the thermal cut-off element, so that the disassembly and reprocessing of the thermal cut-off element is easy.

### [Description of Reference numerals]

100: Battery core module
110: Battery unit
112: Battery body
112a: End
114: First electrode
116: Second electrode
120: Electrical connection assembly
122: First conductive component
1221, 1261: End portion
124: Second conductive component
126: Third conductive component
128: Thermal cut-off element
129: Insulating adhesive
129a, 129b, 129c, 129d: Opening

## Claims

1. A battery core module comprising:
a battery unit comprising a battery body, a first electrode, and a second electrode, wherein the battery body has an end and wherein the first electrode and the second electrode are disposed at the end; and
an electrical connection assembly disposed at the end and comprising a first conductive component, a second conductive component, a third conductive component, a thermal cut-off element, and an insulating adhesive, wherein the insulating adhesive wraps a portion of the first conductive component, a portion of the second conductive component, and a portion of the third conductive component, wherein the thermal cut-off element is connected between the second conductive component and the third conductive component, wherein the first conductive component is connected to the first electrode, and wherein the second conductive component is connected to the second electrode.

2. The battery core module according to claim 1,
wherein the insulating adhesive is coupled to the first conductive component, the second conductive component, and the third conductive component through insert-injection molding.

3. The battery core module according to claim 1,
wherein the insulating adhesive has two openings, and wherein a local portion of the first conductive component and a local portion of the second conductive component are respectively exposed through the two openings so as to be connected to the first electrode and the second electrode, respectively.

4. The battery core module according to claim 1,
wherein the insulating adhesive has two openings, and wherein a local portion of the second conductive component and a local portion of the third conductive component are respectively exposed through the two openings so as to be connected to both ends of the thermal cut-off element, respectively.

5. The battery core module according to claim 1,
wherein a distal end of the first conductive component and a distal end of the third conductive component protrude and extend from the insulating adhesive.

6. The battery core module according to claim 5,
wherein the first electrode extends to be folded onto the electrical connection assembly and is connected to the first conductive component, and wherein the second electrode extends to be folded onto the electrical connection assembly and is connected to the second conductive component.

7. The battery core module according to claim 1,
wherein the battery core module is installed inside an electronic product,
wherein a distal end of the first conductive component and a distal end of the third conductive component are connected to a circuit board of the electronic product,
wherein the first electrode is connected to the circuit board through the first conductive component, and
wherein the second electrode is connected to the circuit board through the second conductive component, the thermal cut-off element, and the third conductive component.

8. The battery core module according to claim 1,
wherein the insulating adhesive is configured to wrap a portion of the first conductive component, a portion of the second conductive component, and a portion of the third element, and wherein the thermal cut-off element is connected between the second conductive component and the third conductive component.

9. The battery core module according to claim 1,
wherein the insulating adhesive is coupled to the first conductive component, the second conductive component, and the third conductive component, and wherein the thermal cut-off element is connected to the second conductive component and the third conductive component through laser welding.

10. The battery core module according to claim 1,
wherein the first conductive component, the second conductive component, the third conductive component, the thermal cut-off element, and the insulating adhesive are preferentially formed into the electrical connection assembly, and then installed together at the end of the battery body.
